(19) Europäisches Patentamt / European Patent Office / Office européen des brevets

(11) **EP 2 292 974 A2**

(12) **EUROPEAN PATENT APPLICATION**

(43) Date of publication:
**09.03.2011 Bulletin 2011/10**

(51) Int Cl.:
***F23C 9/00*** *(2006.01)*     ***F23C 9/08*** *(2006.01)*
***F23L 7/00*** *(2006.01)*

(21) Application number: **10168834.9**

(22) Date of filing: **08.07.2010**

| | |
|---|---|
| (84) Designated Contracting States: **AL AT BE BG CH CY CZ DE DK EE ES FI FR GB GR HR HU IE IS IT LI LT LU LV MC MK MT NL NO PL PT RO SE SI SK SM TR** Designated Extension States: **BA ME RS** | (72) Inventors: • **Hayashi, Yoshiharu** **Tokyo 100-8220 (JP)** • **Shibata, Tsuyoshi** **Tokyo 100-8220 (JP)** • **Taniguchi, Masayuki** **Tokyo 100-8220 (JP)** |
| (30) Priority: **14.07.2009 JP 2009165492** | (74) Representative: **Beetz & Partner** **Patentanwälte** **Steinsdorfstrasse 10** **80538 München (DE)** |
| (71) Applicant: **Hitachi, Ltd.** **Chiyoda-ku** **Tokyo 100-8280 (JP)** | |

(54) **Oxyfuel boiler and control method for oxyfuel boiler**

(57) The invention relates to an oxyfuel boiler, wherein: an air separation unit for separating air and manufacturing oxygen from air, an oxygen supply system for leading the oxygen manufactured by the air separation unit to the oxyfuel boiler, and a recirculation system for leading a part of exhaust gas branched from the exhaust gas discharged from the oxyfuel boiler to the oxyfuel boiler are installed, respectively.

It is proposed that the oxyfuel boiler further comprises: a measuring sensor for measuring a first operating parameter of the system, and a control unit which comprises a fuel flow rate controller for calculating an instruction signal of fuel supplied to the oxyfuel boiler, a unit for setting a desired value for an operating parameter, and an exhaust gas flow rate controller (160) for outputting an instruction signal for adjusting an operation of the recirculation system (25) on the basis of the actual and desired values of the operating parameters.

*FIG. 1*

EP 2 292 974 A2

**Description**

BACKGROUND OF THE INVENTION

(Field of the Invention)

The present invention relates to a coal thermal power plant aiming at capturing $CO_2$ and more particularly to an oxyfuel boiler suitable for capturing the $CO_2$ of the coal thermal power plant and a control method for the oxyfuel boiler.

(Description of Related Art)

As a global warming countermeasure, the action of discharge reduction of $CO_2$ (carbon dioxide) that is one of the green house gases is taken all over the world. The thermal power plant is one of the facilities discharging a large quantity of $CO_2$ and particularly, the coal thermal power plant including a coal boiler of burning coal containing a large quantity of carbon and generating a large quantity of $CO_2$ in combustion exhaust gas discharges the largest quantity of $CO_2$ per generated energy and an immediate $CO_2$ reduction countermeasure is required.

As a $CO_2$ reduction countermeasure of the coal thermal power plant, in addition to the realization of high efficiency of power generation, the separation and capture of $CO_2$ from combustion exhaust gas generated by combustion in the coal boiler may be cited.

The $CO_2$ separation and capture use a method for taking out, compressing, and liquefying $CO_2$ from the combustion exhaust gas generated in the coal thermal power plant and storing the liquefied $CO_2$ deep underground through a pipe line.

The separation and capture method of $CO_2$ in combustion exhaust gas which is applied to the coal thermal power plant is broadly divided into three types of (1) pre-combustion capture, (2) post-combustion capture, and (3) oxyfuel-combustion.

The pre-combustion capture method of (1) is a method of capturing $CO_2$ from a mixed gas of $H_2$ (hydrogen) and $CO_2$ obtained by the reaction of coal and water vapor using a physical absorption method and using the residual $H_2$ as fuel. If the fuel is $H_2$, no $CO_2$ is generated from combustion.

The post-combustion capture method of (2) is a method of capturing $CO_2$ from combustion exhaust gas obtained by ordinary coal combustion (called air combustion) in the air using the film separation method. In this case, the main components of the combustion exhaust gas are $N_2$ (nitrogen) contained in the air and $CO_2$ generated by combustion and the method separates them and captures only $CO_2$.

For the two $CO_2$ separation and capture methods aforementioned, the oxyfuel-combustion method of (3) is a method, by use of a constitution that oxygen is separated from air, and the separated pure oxygen is supplied to the coal boiler, and coal fuel is burned, thus the coal boiler is used as an oxyfuel boiler, for supplying mixed gas as a part of combustion exhaust gas (the main component is $CO_2$) generated by burning coal using the oxyfuel boiler and the pure oxygen to the oxyfuel boiler as an oxidizing gas, thereby burning the coal.

On the other hand, combustion exhaust gas generated by a conventional boiler contains a large quantity of nitrogen ($N_2$), so that a process of separating carbon dioxide ($CO_2$) from exhaust gas discharged from the conventional boiler is necessary, though the component of combustion exhaust gas generated by the oxyfuel boiler is almost all $CO_2$, so that without performing the $CO_2$ separation process on the exhaust gas, $CO_2$ can be captured straight.

Mixing oxygen with $CO_2$ as an oxidizing gas supplied to the oxyfuel boiler is to suppress the flame temperature burning in the coal boiler.

In the combustion of supplying only oxygen to the coal boiler and burning pulverized coal (combustion of pure oxygen), the flame temperature burning in the coal boiler rises, so that from the viewpoint of the necessity of expensive heat resistant steel as a boiler material and from the viewpoint that the blowing flow rate of oxidizing gas at a burner installed in the coal boiler is lowered and flame formation is difficult, no pure oxygen combustion is executed in the coal boiler.

When modifying the coal boiler from air-fuel combustion to oxyfuel combustion, if the balance of the heat absorption rate in the oxyfuel combustion can reproduce the balance of the heat absorption rate in the air-fuel combustion, the modification for changing the heat transfer area is unnecessary, thus the modification cost of the boiler can be greatly suppressed.

Here, the oxyfuel boiler changes the quantity of combustion exhaust gas to be mixed with oxygen, thereby adjusting the oxygen concentration of the oxidizing gas, thus the balance of the heat absorption rate of the heat exchangers and the overall heat absorption rate of the boiler can be changed, so that adoption of a control method for producing a condition close to that of the air-fuel combustion by use of it may be considered.

For example, the control method of the oxyfuel boiler in which the coal boiler described in Japanese Patent Laid-open No. 2007-147162 performs oxyfuel combustion presets a target value of the heat absorption rate of the boiler according to the load request, controls the exhaust gas circulation rate so as to make the measured value of the heat absorption rate equal to the target value, thereby adjusting the oxygen concentration of the oxidizing gas.

The target value aforementioned is set so as to be equal to the target heat absorption rate set in an existing air-fuel boiler. Furthermore, for the oxygen supply rate, a set value according to the load request is provided.

Patent Document 1: Japanese Patent Laid-open No. 2007-147162

SUMMARY OF THE INVENTION

However, the control method of the oxyfuel boiler in which the coal boiler described in Japanese Patent Laid-open No. 2007-147162 performs oxyfuel combustion controls the oxygen quantity supplied to the coal boiler to the set value according to the boiler load and controls the exhaust gas circulation rate so as to make the heat absorption rate of the boiler equal to that of the existing air-fuel boiler. Therefore, if the oxygen concentration supplied to the coal boiler is changed, as mentioned above, not only the overall heat absorption rate of the boiler but also the balance of the heat absorption rate of each heat exchanger composing the boiler is changed.

Therefore, using only the heat absorption rate of the boiler as a control index, when the oxygen concentration supplied to the coal boiler is controlled so as to increase so that the control index meets the target value equal to that of the existing air-fuel boiler, it may be considered that the heat absorption balance of each heat exchanger may fall into a condition greatly different from that under the air-fuel combustion condition. Furthermore, in some of the heat exchangers, if the heat absorption rate is excessively larger than that under the air-fuel combustion condition, the heat absorption rate exceeds the limit of the heat resistance of the material and it may result in damage to the material.

Particularly, when the heat absorption efficiency of the coal boiler is reduced due to deterioration over time, the oxygen concentration supplied to compensate for the reduction of the heat absorption efficiency of the boiler is controlled so as to increase, so that the gas temperature of the furnace rises in accordance with it, thus the heat absorption rate of the furnace increases, and the thermal damage of the material advances more.

An object of the present invention is to provide a highly reliable oxyfuel boiler in which when the coal boiler operated as an existing air-fuel boiler is operated as an oxyfuel boiler, the expense required for modification can be suppressed, and the damage to the oxyfuel boiler due to high temperature gas is prevented, and stable operations are available over a long period of time and a control method for the oxyfuel boiler.

An oxyfuel boiler of the present invention is structured so as to mix oxygen separated from air with a part of exhaust gas branched from the exhaust gas discharged from a boiler for generating vapor and supplying to a vapor demand facility by burning coal fuel, and supplying the mixed gas to the boiler as an oxidizing gas for burning the coal, wherein: an air separation unit for separating air and manufacturing oxygen from air, an oxygen supply system for leading the oxygen manufactured by the air separation unit to the oxyfuel boiler, a recirculation system for leading a part of exhaust gas branched from the exhaust gas discharged from the oxyfuel boiler to the oxyfuel boiler, and a recirculation fan for supplying the exhaust gas to the recirculation system are installed, respectively, **characterized in that**, the oxyfuel boiler is further comprising: measuring sensors for measuring a vapor temperature, a flow rate, and pressure which are installed in each heat exchanger of a furnace or water walls of the oxyfuel boiler, and a control unit which comprising a fuel flow rate controller for calculating an instruction signal of fuel supplied to the oxyfuel boiler, a furnace heat absorption rate calculator for calculating the heat absorption rate obtained by vapor by the heat exchangers of the furnace or the water walls on the basis of measured values by the measuring sensors, a heat absorption rate setting unit for setting a desired value of the furnace heat absorption rate according to the instruction signal of the fuel flow rate controller, and an exhaust gas flow rate controller for outputting an instruction signal for adjusting an operation of the recirculation fan on the basis of the calculated values of the heat absorption rate of the heat exchangers of the furnace or the water walls which are calculated by the furnace heat absorption rate calculator and a set value of the heat absorption rate set by the heat absorption rate setting unit.

Further, an oxyfuel boiler of the present invention structured so as to mix oxygen separated from air with a part of the exhaust gas branched from the exhaust gas discharged from a boiler for generating vapor and supplying to a vapor demand facility by burning coal fuel, and supplying the mixed gas to the boiler as an oxidizing gas for burning the coal, wherein: an air separation unit for separating air and manufacturing oxygen from air, an oxygen supply system for leading the oxygen manufactured by the air separation unit to the oxyfuel boiler, a recirculation system for leading a part of exhaust gas branched from the exhaust gas discharged from the oxyfuel boiler to the oxyfuel boiler, and a recirculation fan for supplying exhaust gas to the recirculation system are installed, respectively, **characterized in that**, the oxyfuel boiler is further comprising: temperature sensors for measuring a vapor temperature at the water wall exit of the oxyfuel boiler or metal temperature sensors for measuring a metal temperature of a representative water pipe of the water walls of the oxyfuel boiler, and a control unit which is comprising a fuel flow rate controller for calculating an instruction signal of fuel supplied to the oxyfuel boiler, a vapor temperature setting unit for setting a desired value of the vapor temperature at the exit of the water walls of the oxyfuel boiler according to the instruction signal of the fuel flow rate controller or a metal temperature setting unit for setting a desired value of the metal temperature of the water pipes of the water walls of the oxyfuel boiler, and an exhaust gas flow rate controller for outputting an instruction signal for adjusting an operation of the recirculation fan on the basis of the temperature set value of the vapor temperature setting unit and the vapor temperature at the exit of the water walls measured by the temperature sensor or on the basis of the metal temperature set value of the metal temperature setting unit and the metal temperature of the representative water pipe of the water walls measured by the metal temperature sensor.

A control method for the oxyfuel boiler of the present invention structured so as to mix oxygen separated from air with a part of the exhaust gas branched from the exhaust gas discharged from a boiler for generating vapor and supplying to a vapor demand facilities by burning coal fuel, and supplying the mixed gas to the boiler as an oxidizing gas for burning the coal, comprising the steps of: separating and manufacturing oxygen mixed as an oxidizing gas supplied to the boiler from air by an air separation unit and leading the manufactured oxygen to the oxyfuel boiler via an oxygen supply system, supplying a part of exhaust gas discharged from the boiler which is mixed as an oxidizing gas supplied to the boiler to the oxyfuel boiler by a recirculation fan via a recirculation system, supplying the oxidizing gas composed of a mixed gas of the oxygen manufactured by the air separation unit and the exhaust gas sent from the recirculation fan to the oxyfuel boiler and using it to burn coal by the oxyfuel boiler, measuring a vapor temperature, a flow rate, and pressure of each heat exchanger of a furnace or water walls of the oxyfuel boiler by measuring sensors, and calculating an instruction signal of fuel supplied to the oxyfuel boiler by a fuel flow rate controller provided in a control unit, calculating a heat absorption rate obtained by vapor by the heat exchangers of the furnace or the water walls on the basis of the measured values of the measuring sensors by a furnace heat absorption calculator provided in the control unit, setting a desired value of the furnace heat absorption rate by a heat absorption rate setting unit provided in the control unit according to the instruction signal of each fuel flow rate controller, calculating an instruction signal for adjusting an operation of the recirculation fan by an exhaust gas flow rate controller provided in the control unit on the basis of calculated values of the heat absorption rate of the heat exchangers of the furnace or the water walls which are calculated by the furnace heat absorption rate calculator and a set value of the heat absorption rate which is set by the heat absorption rate setting unit, and adjusting an exhaust gas supply rate supplied from the recirculation fan so as to make the heat absorption rate of the furnace or the water walls equal to a desired set heat absorption rate by the instruction signal calculated by the exhaust gas flow rate controller.

Further, a control method for the oxyfuel boiler of the present invention structured so as to mix oxygen separated from air with a part of the exhaust gas branched from the exhaust gas discharged from a boiler for generating vapor and supplying to a vapor demand facility by burning coal fuel, and supplying the mixed gas to the boiler as an oxidizing gas for burning the coal, comprising the steps of: separating and manufacturing oxygen mixed as an oxidizing gas supplied to the boiler from air by an air separation unit and leading the manufactured oxygen to the oxyfuel boiler via an oxygen supply system, supplying a part of exhaust gas discharged from the boiler which is mixed as an oxidizing gas supplied to the boiler to the oxyfuel boiler by a recirculation fan via a recirculation system, supplying the oxidizing gas composed of a mixed gas of the oxygen manufactured by the air separation unit and exhaust gas sent from the recirculation fan to the oxyfuel boiler and using it to burn coal by the oxyfuel boiler, measuring the vapor temperature at the exit of the water walls of the oxyfuel boiler by the measuring sensors or measuring a metal temperature of a representative water pipe of the water walls of the oxyfuel boiler by metal temperature sensors, and calculating an instruction signal of fuel supplied to the oxyfuel boiler by a fuel flow rate controller provided in a control unit, setting a desired value of the vapor temperature at the water wall exit of the oxyfuel boiler according to the instruction signal of the fuel flow rate controller or setting a desired value of the metal temperature of water pipes of the water walls of the oxyfuel boiler by a temperature setting unit provided in the control unit, calculating an instruction signal for adjusting an operation of the recirculation fan by an exhaust gas flow rate controller provided in the control unit on the basis of a temperature set value of the vapor temperature setting unit and the vapor temperature at the water wall exit measured by the temperature sensor or on the basis of the metal temperature set value of the metal temperature setting unit and the metal temperature of the water pipes of the water walls measured by the metal temperature sensor, and adjusting the exhaust gas supply rate supplied from the recirculation fan so as to make the vapor temperature at the water wall exit of the oxyfuel boiler equal to the desired set vapor temperature or the metal temperature of the water pipes of the water walls of the oxyfuel boiler equal to the desired set metal temperature by the instruction signal calculated by the exhaust gas flow rate controller.

According to the present invention, when a coal boiler operated as an existing air-fuel boiler is operated as an oxyfuel boiler, the expense required for modification can be suppressed, and the damage to the oxyfuel boiler due to high-temperature gas is prevented, thus a highly reliable oxyfuel boiler capable of operating stably over a long period of time and a control method for the oxyfuel boiler can be realized.

BRIEF DESCRIPTION OF THE DRAWINGS

Fig. 1 is a schematic constitution showing the coal thermal power plant including the oxyfuel boiler that is a first embodiment of the present invention.

Fig. 2 is a schematic cross sectional view showing the constitution of the oxyfuel boiler of the first embodiment shown in Fig. 1.

Fig. 3 is a control block diagram showing the constitution of the control unit for controlling the oxyfuel boiler of the first embodiment shown in Fig. 1.

Fig. 4 is a control block diagram showing the constitution of the exhaust gas circulation rate controller that is a component of the control unit shown in Fig. 3.

Fig. 5 is a control block diagram showing the constitution of the oxygen supply rate controller that is a component of the control unit shown in Fig. 3.

Fig. 6 is a schematic constitution showing the coal thermal power plant including the oxyfuel boiler that is a second embodiment of the present invention.

Fig. 7 is a control block diagram showing the constitution of the control unit for controlling the oxyfuel boiler of the second embodiment shown in Fig. 6.

Fig. 8 is a schematic constitution showing the coal thermal power plant including the oxyfuel boiler which is a third embodiment of the present invention.

Fig. 9 is a control block diagram showing the constitution of the control unit for controlling the oxyfuel boiler of the third embodiment shown in Fig. 8.

## DETAILED DESCRIPTION OF THE INVENTION

The oxyfuel boiler that is an embodiment of the present invention and the control method for the oxyfuel boiler will be explained below with reference to the accompanying drawings.

(Embodiment 1)

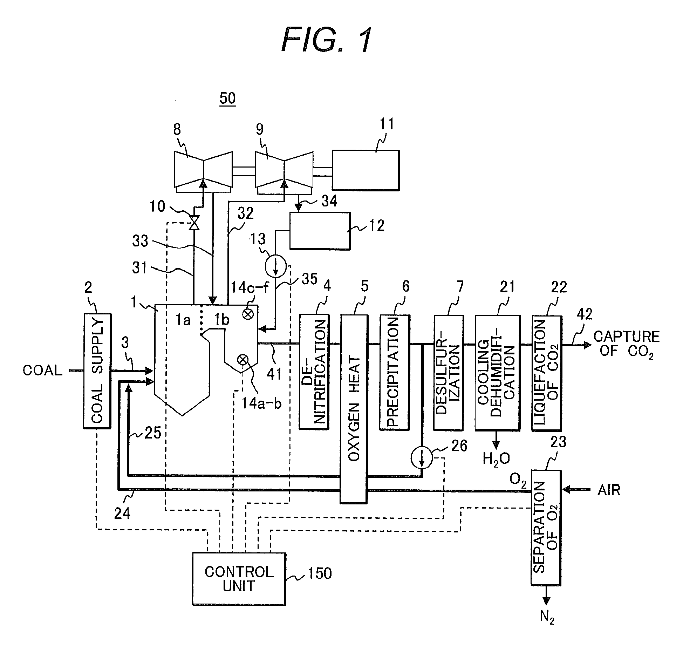

The oxyfuel boiler that is a first embodiment of the present invention and the control method for the oxyfuel boiler will be explained below by referring to Figs. 1 to 5.

Fig. 1 is a schematic constitution showing the constitution of the coal thermal power plant suitable for $CO_2$ capture having the oxyfuel boiler that is a first embodiment of the present invention.

The coal thermal power plant having the oxyfuel boiler which is a first embodiment of the present invention includes an oxyfuel boiler 1 for burning pulverized coal as fuel by oxygen separately supplied by the coal boiler. The oxyfuel boiler 1 has the same structure as that of an ordinary air-fuel boiler for burning pulverized coal as fuel by supplying air.

In the oxyfuel boiler 1, coal as fuel is pulverized to pulverized coal by a coal supply unit 2 and the pulverized coal is supplied to the oxyfuel boiler 1 via a coal supply system 3 from the coal supply unit 2 and is burnt together with oxygen separately supplied.

Combustion exhaust gas generated by burning pulverized coal as fuel together with oxygen by the oxyfuel boiler 1 is led into denitrification equipment 4 installed on the downstream side of the oxyfuel boiler 1 as exhaust gas via an exhaust gas system 41 from the oxyfuel boiler 1 and is reduced so as to make the concentration of a nitrogen oxide (NOx) contained in the exhaust gas discharged from the oxyfuel boiler 1 equal to a desired value.

The exhaust gas flowing through the denitrification equipment 4 is introduced into an oxygen heater 5 installed on the downstream side of the denitrification equipment 4 via the exhaust gas system 41 and gas supplied to the oxyfuel boiler 1 is heated by the oxygen heater 5 using the heat of the passing exhaust gas.

The exhaust gas flowing through the oxygen heater 5 is introduced into a dust collector 6 installed on the downstream side of the oxygen heater 5 via the exhaust gas system 41 and dust included in the exhaust gas is removed by the dust collector 6.

Furthermore, the exhaust gas flowing through the dust collector 6 is introduced into desulfurization equipment 7 installed on the downstream side of the dust collector 6 via the exhaust gas system 41 and is reduced so as to make the concentration of a sulfur oxide (SOx) contained in the exhaust gas equal to a desired value.

In the oxyfuel boiler 1, pluralities of heat exchangers (not drawn) which are heated by combustion exhaust gas flowing through the inside of the oxyfuel boiler 1 and generate vapor are installed.

And, high-pressure and high-temperature vapor generated by the heat exchangers of the oxyfuel boiler 1 is supplied to a high-pressure steam turbine 8 composing a steam turbine facility 50 that is a vapor demand facility via a vapor system 31 and drives the high-pressure steam turbine 8. The high-pressure vapor flow rate supplied to the high-pressure steam turbine 8 from the oxyfuel boiler 1 is controlled by a control valve 10 installed in the vapor system 31.

Vapor which drives the high-pressure steam turbine 8 and is discharged is supplied to the heat exchangers installed in the oxyfuel boiler 1 via a vapor system 33 and low-pressure and high-temperature vapor reheated by the heat exchangers is supplied to a low-pressure steam turbine 9 composing the steam turbine facility 50 via a vapor system 32 from the oxyfuel boiler 1 by combustion exhaust gas flowing through the inside of the oxyfuel boiler 1 and drives the low-pressure steam turbine 9.

In the steam turbine facility 50, a generator 11 driven by the high-pressure steam turbine 8 and the low-pressure steam turbine 9 so as to rotate and generate power is installed. And, the vapor that drives the low-pressure steam turbine 9 and is discharged flows into a condenser 12 via a vapor system 34, is cooled by the condenser 12, and is condensed to water.

The condensed water condensed by the condenser 12 is raised in pressure by a water supply pump 13 installed in a water supply system 35 and is supplied to a heat exchanger (not drawn) of the oxyfuel boiler 1 as feed water.

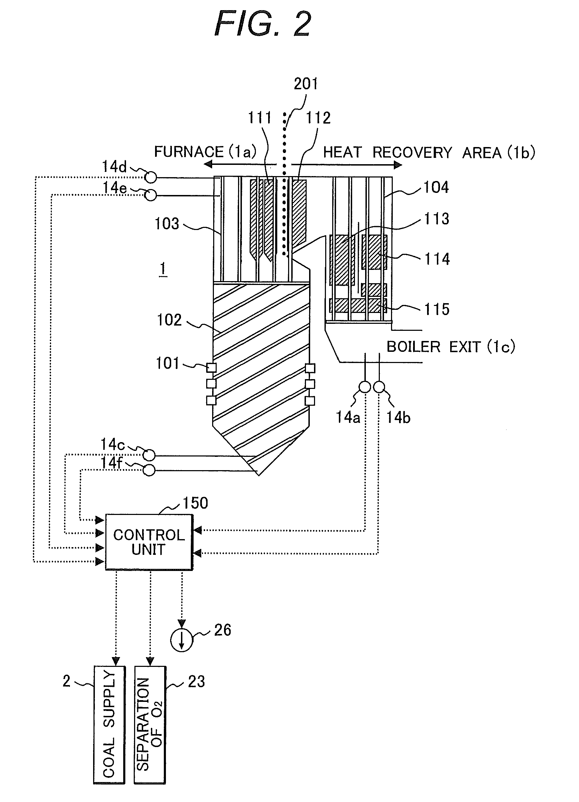

In the gas exit portion of the oxyfuel boiler 1, as shown in Fig. 2, an exhaust gas temperature sensor 14a for measuring the temperature of combustion exhaust gas that is a condition quantity of the plant and an exhaust gas composition sensor 14b for measuring the concentration of oxygen of the exhaust gas are installed. And, in the coal thermal power plant including the oxyfuel boiler 1, a control unit 150 for executing various kinds of control is installed.

Here, in an actual coal thermal power plant, various sensors for measuring the condition quantities are installed in the main devices other than the oxyfuel boiler and the control unit 150 transfers a control signal for operating the main devices on the basis of the condition quantities of the plant measured from the various sensors installed in the main devices composing the coal thermal power plant and controls the operation of the coal thermal power plant.

Further, in the coal thermal power plant of this embodiment shown in Fig. 1, the constitution related to the operation of the oxyfuel boiler 1 is mostly shown and the other constitution is omitted.

Further, the main devices composing the coal thermal power plant explained above are devices installed in a coal thermal power plant including an ordinary air-fuel boiler (the oxygen heater 5, in an ordinary coal thermal power plant, heats air supplied to the air-fuel boiler, so that it is called an air heater).

In the coal thermal power plant including the oxyfuel boiler 1 of this embodiment, in the constitution different from that of the coal thermal power plant including the ordinary air-fuel boiler, as shown in Fig. 1, a cooling dehumidifier 21 and a carbon dioxide liquefying facility 22 which are devices necessary to separate and capture $CO_2$ in exhaust gas are installed.

Namely, the cooling dehumidifier 21 for cooling exhaust gas flowing through the desulfurization equipment 7 and removing moisture is installed in the exhaust gas system 41 on the downstream side of the desulfurization equipment 7 and the exhaust gas (mainly $CO_2$) which flows through the cooling dehumidifier 21 and passes the steps of dust removal, denitrification, desulfurization, and dehumidification is introduced into the carbon dioxide liquefying facility 22 installed on the downstream side of the cooling dehumidifier 21 via the exhaust gas system 41 and $CO_2$ in the exhaust gas is separated, compressed, and liquefied by the carbon dioxide liquefying facility 22.

$CO_2$ liquefied by compression and liquefaction by the carbon dioxide liquefying facility 22 is conveyed to a storing facility not drawn from the carbon dioxide liquefying facility 22 via a carbon dioxide capture system 42 and is stored.

Furthermore, as a facility necessary to modify the ordinary air-fuel boiler to an oxyfuel boiler 1, in this embodiment, an air separation unit 23 for separating oxygen ($O_2$) and nitrogen ($N_2$) from air taken in from the atmosphere is installed on the upstream side of the oxyfuel boiler 1 and the oxygen separated by the air separation unit 23 is supplied to the oxyfuel boiler 1 via an oxygen supply system 24 and burns pulverized coal supplied from the coal supply system 3 in the oxyfuel boiler 1 as oxidizing gas mixed with exhaust gas recirculating via a recirculation system 25.

The oxygen supply system 24 for supplying pure oxygen separated by the air separation unit 23 or oxygen (slightly containing nitrogen as an impurity) is structured so as to supply it to the oxyfuel boiler 1 via the oxygen heater 5, so that the pure oxygen or oxygen aforementioned is heated by the oxygen heater 5 by exhaust gas flowing through the exhaust gas system 41, then is supplied to the oxyfuel boiler 1 via the oxygen supply system 24, and is used to burn pulverized coal. Further, gas (mainly $N_2$) after oxygen is removed from air by the air separation unit 23 is discharged outside the system.

In the coal thermal power plant including the oxyfuel boiler 1 of this embodiment, as a facility necessary to modify the ordinary air-fuel boiler to an oxyfuel boiler 1, the recirculation system 25 for leading a part of exhaust gas branched from the exhaust gas system 41 between the dust collector 6 and the desulfurization equipment 7 and permitting the oxyfuel boiler 1 to recirculate is installed. The recirculation system 25 includes a recirculation fan 26 and is structured so as to send a part of the exhaust gas branched from the exhaust gas system 41 to the oxyfuel boiler 1 as recirculating exhaust gas.

And, in the coal thermal power plant including the oxyfuel boiler 1 of this embodiment, as a facility necessary to modify the ordinary air-fuel boiler to an oxyfuel boiler 1, the control unit 150 is installed. The detailed constitution of the control unit 150 will be explained later.

In the oxyfuel boiler 1 of this embodiment, the recirculation system 25 is structured so as to supply recirculation exhaust gas to the oxyfuel boiler 1 via the oxygen heater 5, so that the recirculation exhaust gas is heated by exhaust gas flowing through the exhaust gas system 41 by the oxygen heater 5, then is supplied to the oxyfuel boiler 1 via the recirculation system 25, and burns pulverized coal supplied from the coal supply system 3 in the oxyfuel boiler 1 as oxidizing gas mixed with oxygen supplied via the oxygen supply system 24.

As mentioned above, the oxidizing gas supplied to the oxyfuel boiler 1 is mixed gas of the pure oxygen supplied from the oxygen supply system 24 and the recirculation gas supplied via the recirculation system 25.

The control unit 150 adjusts the pure oxygen supply rate by controlling the operation of the air separation unit 23 according to an instruction signal calculated by the control unit 150, while adjusting the exhaust gas circulation rate by controlling the number of revolutions of the recirculation fan 26 according to the instruction signal calculated by the control unit 150, thereby controls so as to make the oxygen concentration contained in the oxidizing gas composed of a mixed gas of pure oxygen and circulation exhaust gas equal to a desired value are implemented.

The supply rate as oxidizing gas supplied to the oxyfuel boiler 1 is a total value of the pure oxygen supply rate and the circulation exhaust gas rate. Further, the oxygen contained in the oxidizing gas added with oxygen supplied from the air separation unit 23 and slight oxygen remaining in the circulation exhaust gas is supplied to the oxyfuel boiler 1.

An increase in the oxygen concentration of the oxidizing gas supplied to the oxyfuel boiler 1 is executed by increasing the pure oxygen supply rate by controlling the operation of the air separation unit 23 or decreasing the exhaust gas circulation rate by controlling the number of revolutions of the recirculation fan 26.

On the other hand, the supply rate of coal as fuel supplied to the oxyfuel boiler 1 is adjusted by controlling the operation of the coal supply unit 2.

By the control unit 150 aforementioned, the oxygen supply rate, exhaust gas circulation rate, and coal supply rate which are parameters for controlling the combustion condition in the oxyfuel boiler 1 are adjusted.

In the control of the oxygen concentration of the oxidizing gas supplied to the oxyfuel boiler 1 of the coal thermal power plant including the oxyfuel boiler of this embodiment, in addition to the flow rate of fuel (coal) supplied to the oxyfuel boiler 1, a part of the heat exchangers of the oxyfuel boiler 1, for example, the portion of a furnace 1a calculates the absorption rate obtained by vapor using the calculated value of the sensor and the oxygen concentration of the oxidizing gas is controlled on the basis of the calculated value of the heat absorption rate.

In the oxyfuel boiler 1 for burning pulverized coal in the coal thermal power plant including the oxyfuel boiler of this embodiment, as shown in Fig. 2, the position of a boundary 201 between the furnace 1a and a heat recovery area 1b is an exit 1c of the furnace and the upstream side of the boundary 210 is called the furnace 1a and the downstream side thereof is called the heat recovery area 1b.

On the lower part of the furnace 1a, a combustion burner 101 is installed and pulverized coal supplied from the combustion burner 101 and oxidizing gas composed of a mixed gas of oxygen and recirculation exhaust gas are burnt and generate high-temperature combustion gas.

High-temperature combustion gas has a structure of flowing in the furnace 1a toward the boiler exit 1c by transferring heat to vapor flowing through a plurality of heat exchangers which are installed in the oxyfuel boiler 1 and are composed of water pipes.

On the lower wall surface of the furnace 1a, a water pipe called a spiral pipe 102 is arranged spirally and on the upper wall surface of the furnace 1a, water pipes called open pass pipes 103 are arranged vertically. The spiral pipe 102 and open pass pipes 103 are called a water wall in batch.

Further, on the wall surface on the side of the heat recovery area 1b shown in Fig. 2, water pipes 104 called a cage wall are installed. The water wall and cage wall are water pipes installed on the wall surface, though in the oxyfuel boiler 1, a plurality of heat exchangers composed of water pipes are installed.

Among these heat exchangers, secondary super heaters 111 are suspended from the ceiling of the furnace 1a. Further, on the downstream side of the secondary super heaters 111, the heat exchangers of tertiary super heaters 112, reheaters 113, primary super heaters 114, and economizers 115 are arranged sequentially in the direction of flow of combustion gas.

In the coal thermal power plant including the oxyfuel boiler 1 of this embodiment, the balance of the heat absorption rate of the heat exchangers is changed due to the adjustment of the oxygen concentration of the oxidizing gas composed of a mixed gas of pure oxygen supplied from the oxygen supply system 24 and recirculation exhaust gas supplied via the recirculation system 25 depends on the heat transfer form called convection heat transfer and radiation heat transfer.

The convection heat transfer is referred to as a heat transfer phenomenon that on the contact surface between high-temperature combustion gas and each water pipe, the heat transfers due to the temperature difference between the two. On the other hand, the radiation heat transfer is a phenomenon that electromagnetic waves emitted from the high-temperature combustion gas are absorbed by the water pipes and are converted to heat energy, thus the heat transfers.

The heat transfer from the combustion gas to the heat exchangers in the boiler is always acted by both convection heat transfer and radiation heat transfer. At this time, in the region of high-temperature combustion gas as the furnace 1a, the heat transfer by radiation heat transfer is dominant and in the region of comparatively low-temperature combustion gas as the heat recovery area 1b, the heat transfer by convection heat transfer is dominant. The reason is that there is a physical property that the heat transfer rate due to the radiation heat transfer is proportional to the biquadratic of the gas temperature.

Therefore, in the oxyfuel boiler 1, if the exhaust gas circulation rate supplied to the oxyfuel boiler 1 via the recirculation system 25 is reduced to increase the oxygen concentration contained in the oxidizing gas, the flame temperature in the furnace 1a rises, so that the radiation heat transfer rate in the furnace 1a increases, and the heat absorption rate on the side of the furnace 1a increases.

On the other hand, if the exhaust gas circulation rate supplied to the oxyfuel boiler 1 via the recirculation system 25 is reduced, the gas flow rate flowing through the oxyfuel boiler 1 is reduced and the gas flow rate is lowered. At this time, the convection heat transfer has a physical property that if the gas flow rate is reduced, the heat transfer rate reduces.

Therefore, if the exhaust gas circulation rate supplied to the oxyfuel boiler 1 via the recirculation system 25 is reduced to increase the oxygen concentration contained in the oxidizing gas, the heat absorption rate in the heat recovery area 1b where the convection heat transfer is dominant is reduced.

Namely, in the oxyfuel boiler 1, if the exhaust gas circulation rate supplied to the oxyfuel boiler 1 is reduced to increase the oxygen concentration contained in the oxidizing gas, there is a tendency that the heat absorption rate on the side of the furnace 1a where the radiation heat transfer is dominant is increased, while the heat absorption rate on the side of the heat recovery area 1b where the convection heat transfer is dominant is reduced.

Further, when the exhaust gas circulation rate supplied to the oxyfuel boiler 1 is increased and the oxygen concentration contained in the oxidizing gas is reduced, the action is reversed.

From the phenomena aforementioned, if the oxygen concentration contained in the oxidizing gas supplied to the oxyfuel boiler 1 is adjusted, the balance of the heat absorption rates of the heat exchangers installed in the oxyfuel boiler 1 can be changed.

Further, with respect to the overall heat absorption rate of the boiler including the side of the furnace 1a and the side of the heat recovery area 1b, in the case of a general air-fuel boiler, if the exhaust gas circulation rate is reduced and the oxygen concentration is increased, the overall heat absorption rate of the boiler is apt to increase. The reason is that if the gas temperature is high, the heat transfer efficiency is high.

When modifying the existing air-fuel boiler for burning pulverized coal with air to an oxyfuel boiler 1 for burning pulverized coal with oxygen, from the viewpoint of the modification cost, even in the case of oxygen combustion, it is preferable to reproduce the same balance of the heat absorption rates of the heat exchangers in the air combustion. The reason is that at the design stage of the boiler, the material of the heat exchangers is selected on the basis of the balance of the heat absorption rate of each heat exchanger (the vapor temperature and pressure in the water pipes and gas temperature outside the water pipes).

The heat exchangers installed in the boiler use an expensive material with excellent heat resistance in the high-temperature region and use a low-priced material with not so excellent heat resistance in the comparatively low-temperature region. Therefore, when the existing air-fuel boiler is modified to an oxyfuel boiler, thus the balance of the heat absorption of oxygen combustion is changed greatly from the balance of the heat absorption of air combustion, the conditions such as temperature which are the selection criteria of the material at the design stage are changed, so that from the viewpoint of the heat resistance of the material, the situation of an impossible operation may be predicted.

To respond to such a case, it may be considered to perform a modification of changing the heat transfer area (concretely, add or delete water pipes) so as to keep the heat exchangers included in the oxyfuel boiler 1 under the service temperature limit of the material, though it is inferred that the modification requires a considerable cost.

Therefore, in the oxyfuel boiler 1 of this embodiment included in the coal thermal power plant, in addition to the supply rate of fuel supplied to the oxyfuel boiler 1, the heat absorption rate obtained by vapor is calculated by the control unit 150 using the measured values of the sensors installed in the furnace 1a shown in Fig. 2 and the oxygen concentration of the oxidizing gas supplied to the oxyfuel boiler 1 is controlled on the basis of the calculated value of the heat absorption rate.

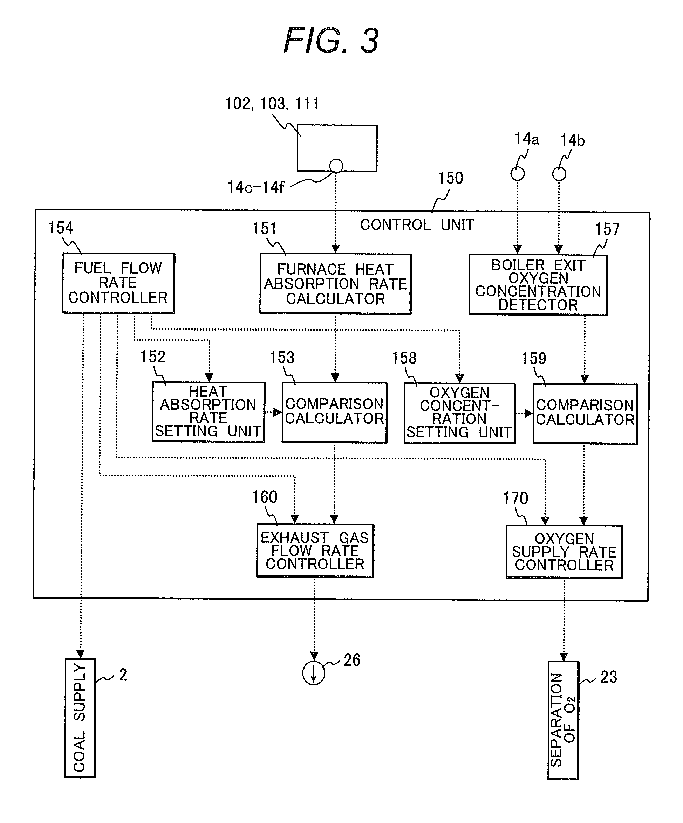

The detailed description of the constitution of the control unit 150 is as indicated below. In the control unit 150, as a controller and a calculator composing the control unit 150, as shown in Fig. 3, a furnace heat absorption rate calculator 151 for calculating the heat absorption rate of the furnace 1a is installed, and the furnace heat absorption rate calculator 151 calculates the heat absorption rate obtained by vapor in the furnace 1a on the basis of the measured values measured by the various sensors of an entrance temperature sensor 14c, an exit temperature sensor 14d, a pressure sensor 14e, and a flow rate sensor 14f which are installed in each heat exchanger positioned on the side of the furnace 1a.

In the example of the oxyfuel boiler 1 shown in Fig. 2, to the heat exchangers installed in the furnace 1a, the water walls 102 and 103 and the secondary super heater 111 conform.

The furnace heat absorption rate calculator 151 includes the functions of the operation expressions of Formulas (1) and (2) indicated below, calculates the sum total of the heat absorption rates of the heat exchangers using the measured values measured by the various sensors on the basis of Formulas (1) and (2) of the operation expressions, and thereby obtains the heat absorption rate obtained by vapor in the furnace 1a.

Firstly, the furnace heat absorption rate calculator 151, on the basis of Formula (1) of the operation expression, using the measured values of the entrance temperature sensor 14c, exit temperature sensor 14d, and pressure sensor 14e installed on the water walls 102 and 103 and secondary super heater 111 of each heat exchanger installed in the furnace 1a, calculates the entrance vapor enthalpy or exit vapor enthalpy of each heat exchanger.

Next, the furnace heat absorption rate calculator 151, on the basis of Formula (2) of the operation expression, obtains the sum total of the heat absorption rates of the water walls 102 and 103 and secondary super heater 111 of each heat exchanger installed in the furnace 1a as an operator, and thereby calculates the heat absorption rate of the furnace 1a.

Formula 1

$$H_i = f(T_i, P_i)' \quad \cdots\cdots (1)$$

In Formula (1) of the operation expression, $H_i$ indicates vapor enthalpy of a heat exchanger i, f a function for converting the vapor temperature and pressure to enthalpy, $T_i$ a vapor temperature of the heat exchanger i, and $P_i$ a vapor pressure of the heat exchanger i.

Formula 2

$$Q = \sum_i F_i \times (H_{out,i} - H_{in,i}) \quad \cdots\cdots (2)$$

In Formula (2) of the operation expression, Q indicates a heat absorption rate of the furnace, $F_i$ a vapor flow rate of the heat exchanger i, $H_{out,i}$ exit vapor enthalpy of the heat exchanger i, and $H_{in,i}$ entrance vapor enthalpy of the heat exchanger i.

In the control unit 150 for controlling the oxyfuel boiler 1 of this embodiment, as a controller and a calculator composing the control unit 150, furthermore, a fuel flow rate controller 154 for calculating an instruction signal for adjusting the drive condition of the coal supply unit 2 so as to make the fuel supplied to the oxyfuel boiler 1 equal to a desired fuel flow rate and outputting it to the coal supply unit 2 and an exhaust gas recirculation rate controller 160 for calculating an instruction signal for adjusting the drive condition of the recirculation fan 26 so as to obtain a desired exhaust gas recirculation rate and outputting it to the recirculation fan 26 are installed.

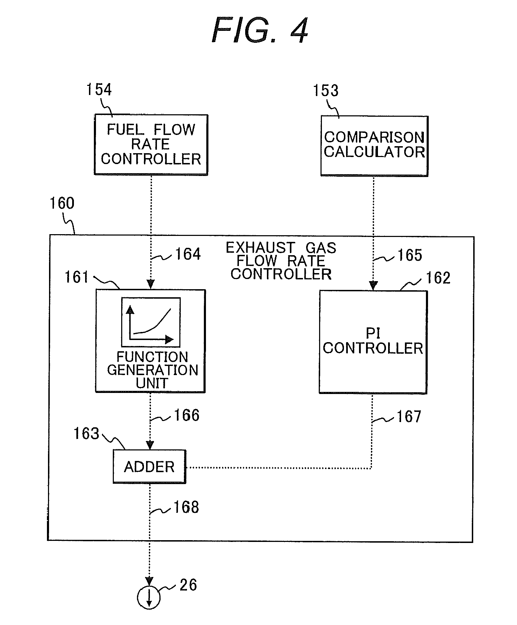

The exhaust gas recirculation rate controller 160, as shown in Fig. 4, to calculate the instruction signal of the exhaust gas recirculation rate, fetches two signals. One of the signals is an instruction signal 164 of the fuel flow rate that is calculated and outputted by the fuel flow rate controller 154 installed in the control unit 150.

And, the other one of the signals is a deviation signal 165 of a comparison calculator 153 for fetching and comparing the furnace heat absorption rate calculated and outputted by the furnace heat absorption rate calculator 151 with the set value outputted by a heat absorption rate setting unit 152 for calculating the set value of the furnace heat absorption rate according to the instruction signal of the fuel flow rate calculated and outputted by the fuel flow rate controller 154 installed in the control unit 150 and outputting the deviation between the two.

In the exhaust gas recirculation rate controller 160, a function generation unit 161 installed in the exhaust gas recirculation rate controller 160 fetches the instruction signal 164 of the fuel flow rate outputted from the fuel flow rate controller 154 and calculates an instruction signal 166 of the exhaust gas recirculation rate.

Furthermore, a PI controller 162 installed in the exhaust gas recirculation rate controller 160 fetches the deviation signal 165 between the calculated value of the furnace heat absorption rate outputted from the comparison calculator 153 and the set value thereof and calculates and outputs a correction signal 167 of the exhaust gas recirculation rate.

Next, the instruction signal 166 of the exhaust gas recirculation rate and the correction signal 167 are added by an adder 163 installed in the exhaust gas recirculation rate controller 160 and an instruction signal 168 of the final exhaust gas recirculation rate corrected according to the furnace heat absorption rate is outputted to the recirculation fan 26.

These calculations are processed on the basis of Formulas (3) to (5) of the operation expressions.

Formula (3) of the operation expression indicates the calculation method of the function included in the function generation unit 161 installed in the exhaust gas recirculation rate controller 160. Formula (3) of the operation expression, on the basis of the conversion function indicating the correspondence of the fuel flow rate to the exhaust gas recirculation rate, calculates the instruction signal of the exhaust gas recirculation rate from the instruction signal of the fuel flow rate. The conversion function is preset.

Formula (4) of the operation expression indicates the calculation method of the function included in the PI controller 162 installed in the exhaust gas recirculation rate controller 160. Formula (4) of the operation expression, on the basis of the deviation signal between the calculation value of the furnace heat absorption rate and the set value thereof, calculates a correction signal of the exhaust gas recirculation rate for the furnace heat absorption rate to follow the set value.

At this time, the proportional gain and integral gain are preset.

Formula (5) of the operation expression indicates the calculation method by the adder 163 installed in the exhaust gas recirculation rate controller 160. The adder 163 adds the correction signal according to the deviation signal of the furnace heat absorption rate to the instruction signal of the exhaust gas recirculation rate calculated from the instruction signal of the fuel flow rate and calculates an instruction signal of the final exhaust gas recirculation rate.

Formula 3

$$y_1(t) = F_1 \left( x_1(t) \right) \quad \cdots\cdots (3)$$

In Formula (3) of the operation expression, $y_1(t)$ indicates an instruction signal of the exhaust gas recirculation rate at the time t, $F_1$ a conversion function from the instruction signal of the fuel flow rate to the instruction signal of the exhaust gas recirculation rate, and $x_1(t)$ an instruction signal of the fuel flow rate at the time t.

Formula 4

$$\Delta y(t) = K_p \cdot x_2(t) + K_i \cdot \int x_2(\tau)\, d\tau \quad \cdots\cdots (4)$$

In Formula (4) of the operation expression, $\Delta y(t)$ indicates a correction signal of the exhaust gas recirculation rate according to the furnace heat absorption rate at the time t, $K_p$ a proportional gain of the PI control, $K_i$ an integral gain of the PI control, and $x_2(\tau)$ a deviation signal between the calculation value of the furnace heat absorption rate and the set value thereof at the time t.

Formula 5

$$y(t) = y_1(t) + \Delta y(t) \quad \cdots\cdots (5)$$

In Formula (5) of the operation expression, $y(t)$ indicates an instruction signal of the exhaust gas recirculation rate corrected by the furnace heat absorption rate at the time t, $y_1(t)$ an instruction signal of the exhaust gas recirculation rate according to the fuel flow rate at the time t, and $\Delta y(t)$ a correction signal of the exhaust gas recirculation rate according to the furnace heat absorption rate at the time t.

Further, in the control unit 150 for controlling the oxyfuel boiler 1 of this embodiment, as a controller and a calculator composing the control unit 150, furthermore, an oxygen supply rate controller 170 for outputting an instruction signal for adjusting the drive condition of the air separation unit 23 so as to obtain a desired oxygen supply rate is installed.

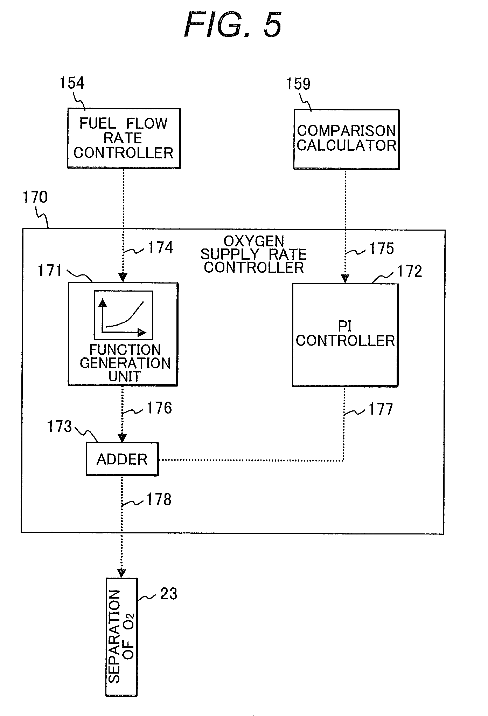

The oxygen supply rate controller 170, as shown in Fig. 5, fetches two signals to calculate an instruction signal of the oxygen supply rate. One of the signals is an instruction signal 174 of the fuel flow rate that is calculated and outputted by the fuel flow rate controller 154 installed in the control unit 150. The instruction signal 174 is equivalent to the instruction signal 164 of the fuel flow rate aforementioned.

And, the other one of the signals is a deviation signal 175 of a comparison calculator 159 for fetching the gas temperature at the boiler exit 1c measured by the exhaust gas temperature sensor 14a and the exhaust gas composition measured by the exhaust gas composition sensor 14b, fetching and comparing the oxygen concentration detected by a boiler exit oxygen concentration detector 157 installed in the control unit 150 with the set value outputted from an oxygen concentration setting unit 158 for calculating the set value of the boiler exit oxygen concentration according to the instruction signal of the fuel flow rate outputted from the fuel flow rate controller 154, and outputting the deviation between the two.

In the oxygen supply rate controller 170, a function generation unit 171 installed in the oxygen supply rate controller 170 fetches the instruction signal 174 of the fuel flow rate outputted from the fuel flow rate controller 154 and calculates the instruction signal 166 of the oxygen supply rate.

Furthermore, a PI controller 172 installed in the oxygen supply rate controller 170 fetches the deviation signal 175 between the detected value of the boiler exit oxygen concentration outputted from a comparison calculator 173 and the set value thereof and calculates and outputs a correction signal 177 of the oxygen supply rate.

Next, an instruction signal 176 of the oxygen supply rate and the correction signal 177 are added by an adder 173 installed in the oxygen supply rate controller 170 and an instruction signal 178 of the final oxygen supply rate corrected according to the boiler exit oxygen concentration is outputted to the air separation unit 23.

The operation expressions of the calculation process by the oxygen supply rate controller 170 are the same as the calculations based on Formulas (3) to (5) of the operation expressions of the exhaust gas recirculation rate controller 160 and with respect to the conversion function, proportional gain, and integral gain, the functions and values suitable for calculations of the oxygen supply rate are preset.

Next, the control of the furnace heat absorption rate by the oxyfuel boiler 1 of this embodiment will be explained below.

In the control unit 150 of the oxyfuel boiler 1 of this embodiment shown in Figs. 1 to 5, the heat absorption rate of the furnace 1a is controlled as indicated below.

Firstly, on the basis of the measured values measured by the entrance temperature sensor 14c, exit temperature sensor 14d, pressure sensor 14e, and flow rate sensor 14f which are installed respectively in the heat exchangers 102, 103, and 111 of the furnace 1a composing the oxyfuel boiler 1, the heat absorption rate obtained by vapor in the heat exchangers 102, 103, and 111 of the furnace 1a is calculated by the furnace heat absorption rate calculator 151 installed in the control unit 150.

And, the comparison calculator 153 installed in the control unit 150 compares the furnace heat absorption rate calculated by the furnace heat absorption rate calculator 151 with the set heat absorption rate of the heat absorption rate setting unit 152 and when the calculated value of the furnace heat absorption rate calculated by the furnace heat absorption rate calculator 151 is lower than the heat absorption rate set value set by the heat absorption rate setting unit 152 of the control unit 150, the control unit 150 controls the exhaust gas recirculation rate controller 160 installed in the control unit 150 by an instruction signal based on the deviation signal compared by the comparison calculator 153 as indicated below.

Namely, the control unit 150 operates so as to suppress the drive of the recirculation fan 26 installed in the recirculation system 25 by an instruction signal outputted from the exhaust gas recirculation rate controller 160, reduces the exhaust gas circulation rate flowing through the recirculation system 25, increases the oxygen concentration contained in the oxidizing gas supplied to the oxyfuel boiler 1, and controls the heat absorption rate of the furnace 1a to a desired value.

Further, by the instruction signal outputted from the comparison calculator 153, when the furnace heat absorption rate calculated by the furnace heat absorption rate calculator 151 is higher than the heat absorption rate set value set by the heat absorption rate setting unit 152, the control unit 150 controls the exhaust gas recirculation rate controller 160 installed in the control unit 150 as indicated below by an instruction signal based on the deviation signal compared by the comparison calculator 153.

Namely, the control unit 150 operates so as to strengthen the drive of the recirculation fan 26 installed in the recirculation system 25 by an instruction signal outputted from the exhaust gas recirculation rate controller 160, increases the exhaust gas circulation rate flowing through the recirculation system 25, reduces the oxygen concentration contained in the oxidizing gas supplied to the oxyfuel boiler 1, and controls the heat absorption rate of the furnace 1a to a desired value.

Next, the complementary control of the oxygen concentration at the exit of the boiler by the oxyfuel boiler 1 of this embodiment will be explained below.

In the control unit 150 of the oxyfuel boiler 1 of this embodiment shown in Figs. 1 to 5, the complementary control of the oxygen concentration at the exit 1c of the boiler is executed as indicated below.

On the basis of the measured values of the exhaust gas temperature sensor 14a and exhaust gas composition sensor 14b that are installed at the exit 1c of the boiler, the oxygen concentration detector 157 at the boiler exit installed in the control unit 150 detects the oxygen concentration at the boiler exit 1c.

And, a comparison calculator 159 installed in the control unit 150 compares the oxygen concentration at the boiler exit 1c detected by the oxygen concentration detector 157 with the oxygen concentration set value set by the oxygen concentration setting unit 158 and when the measured value of the oxygen concentration at the boiler exit 1c detected by the oxygen concentration detector 157 is lower than the oxygen concentration set value set by the oxygen concentration setting unit 158, the control unit 150 controls the oxygen supply rate controller 170 installed in the control unit 150 as indicated below by an instruction signal based on the deviation signal compared by the comparison calculator 159.

Namely, the control unit 150 operates so as to increase the operation of the oxygen supply unit 23 by an instruction signal outputted from the oxygen supply rate controller 170, increases the oxygen supply rate supplied from the oxygen supply unit 23 to the oxyfuel boiler 1 via the oxygen supply system 24, and controls the oxygen concentration at the boiler exit 1c to a desired concentration.

Further, when the comparison calculator 159 finds that the measured value of the oxygen concentration at the boiler exit 1d detected by the oxygen concentration detector 157 is higher than the oxygen concentration set value set by the oxygen concentration setting unit 158, the control unit 150 controls the oxygen supply rate controller 170 installed in the control unit 150 as indicated below by an instruction signal based on the deviation signal compared by the comparison calculator 159.

Namely, the control unit 150 operates so as to reduce the operation of the oxygen supply unit 23 by an instruction signal outputted from the oxygen supply rate controller 170, reduces the oxygen supply rate supplied from the oxygen supply unit 23 to the oxyfuel boiler 1 via the oxygen supply system 24, and controls the oxygen concentration at the boiler exit 1c to a desired concentration.

The aforementioned control of the furnace heat absorption rate by the oxyfuel boiler 1 of this embodiment is control of the exhaust gas circulation rate on the basis of the heat absorption rate of the furnace 1a, though it may be considered that the exhaust gas circulation rate is controlled on the basis of the heat absorption rate of the portion which is a limited range of greater effect of the radiation heat transfer, for example, the heat absorption rate of only the water walls 102 and 103 of the furnace 1a.

In this case, in the aforementioned control, if the furnace 1a is replaced with the water wall, in the similar apparatus constitution, the oxyfuel boiler 1 can be controlled.

According to the aforementioned oxyfuel boiler which is an embodiment of the present invention, when a coal boiler operated as an existing air-fuel boiler is operated as an oxyfuel boiler, the expense required for modification can be suppressed, thus a highly reliable oxyfuel boiler which prevents damage to the oxyfuel boiler due to high-temperature gas and can be operated stably over a long period of time and the control method for the oxyfuel boiler can be realized.

(Embodiment 2)

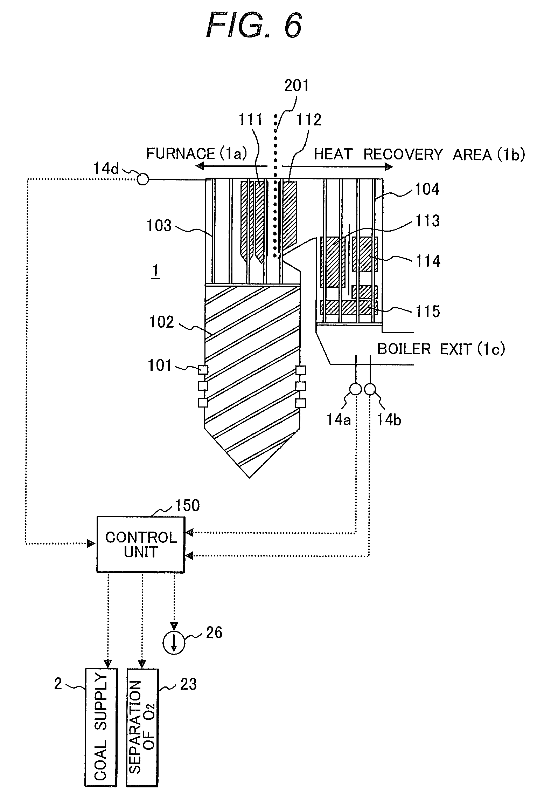

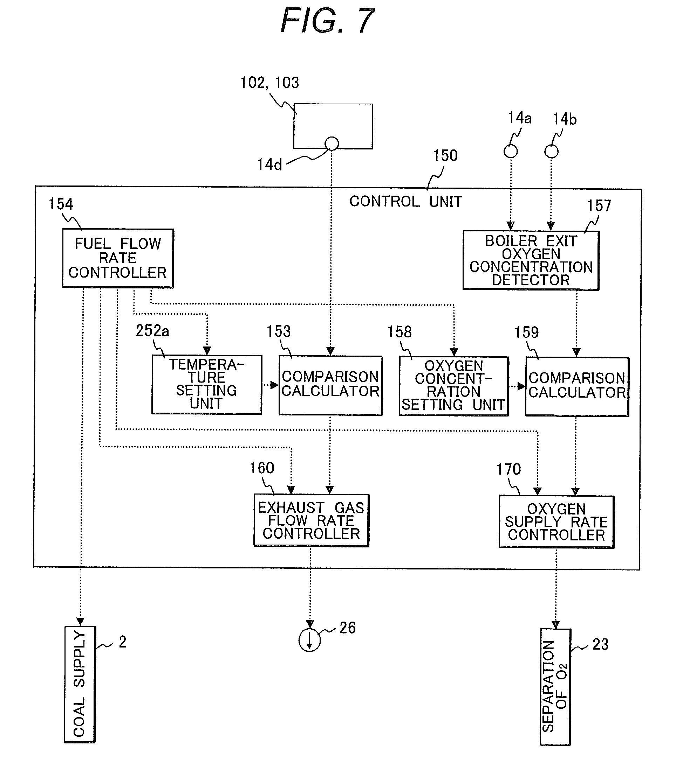

Next, the oxyfuel boiler which is a second embodiment of the present invention and the control method for the oxyfuel boiler will be explained below by referring to Figs. 6 and 7.

Fig. 6 is a schematic cross sectional view showing the constitution of the coal thermal power plant suitable for $CO_2$ capture having the oxyfuel boiler that is a second embodiment of the present invention.

The oxyfuel boiler 1 of the second embodiment of the present invention has a basic constitution substantially similar to that of the oxyfuel boiler 1 of the first embodiment of the present invention shown in Figs. 1 to 5, so that the explanation of the portions of the constitution common to both will be omitted and only the different portions of the constitution will be explained below.

In the oxyfuel boiler 1 of the second embodiment of the present invention shown in Figs. 6 and 7, compared with the oxyfuel boiler of the first embodiment shown in Figs. 1 to 5, the constitution using very few sensors for control is different.

Namely, in the control of the exhaust gas circulation rate of the oxyfuel boiler 1 of the first embodiment, the sensors used for measurement to calculate the heat absorption rate of the furnace 1a or the water walls 102 and 103 are the entrance temperature sensor 14c, pressure sensor 14e, exit temperature sensor 14d, and flow rate sensor 14f, though in the control of the exhaust gas circulation rate of the oxyfuel boiler 1 of the second embodiment, as a sensor used for measurement, only the exit temperature sensor 14d installed at the exit of the water wall 103 of the furnace 1a is used.

Next, in the oxyfuel boiler 1 of the second embodiment, the constitution of the control unit 150 and the control of the exhaust gas circulation rate that are different from those of the oxyfuel boiler 1 of the first embodiment will be explained.

Fig. 7 shows the constitution of the control unit 150 of the oxyfuel boiler 1 of the second embodiment of the present invention shown in Fig. 6.

In the constitution of the control unit 150 of the oxyfuel boiler 1 of the second embodiment of the present invention shown in Fig. 7, compared with the control unit 150 of the oxyfuel boiler 1 of the first embodiment shown in Fig. 3, with respect that the furnace heat absorption rate calculator 151 is not installed, with respect that the heat absorption rate setting unit 152 is replaced with a vapor temperature setting unit 252a, and with respect that the sensor information fetched by the control unit 150 is little are different, though the other portion of the constitution is the same as that of the control unit 150 of the first embodiment.

Further, the control unit 150 of the first embodiment shown in Fig. 3, on the basis of the measured values of the various sensors for measuring the temperature, pressure, and flow rate which are installed in the furnace 1a or the water walls 102 and 103, the control unit 150 calculates the heat absorption rate of the furnace 1a or the water walls 102 and 103, compares the calculated heat absorption rates with the set values thereof, and thereby corrects the control signal of the exhaust gas circulation rate.

In regards to this, the control unit 150 of the second embodiment is structured so as to compare the measured values of the temperature sensors installed at the exit of the water walls 102 and 103 of the furnace 1a with the set values corresponding to the measuring points and correct the control signal of the exhaust gas circulation rate.

On the other hand, the aforementioned control unit 150 of the first embodiment shown in Fig. 3, when calculating the heat absorption rate of the water walls 102 and 103 of the furnace 1a, obtains enthalpy (the quantity of heat per unit mass) using the temperature and pressure of vapor measured by the sensors and calculates the quantity of heat using the enthalpy and the vapor flow rate measured by the sensors.

At this time, if the entrance vapor temperature of the water walls 102 and 103 of the furnace 1a is constant and the vapor flow rate and pressure are controlled to the values determined by the water supply control unit according to the operation conditions (the required value of the output of the generator, coal supply rate, etc.), in the control unit 150 of the first embodiment, for the process relating to comparison of the measured value of the heat absorption rate necessary for control of the exhaust gas circulation rate with the set value thereof, comparison of the measured value of the exit vapor temperature of the water walls 102 and 103 with the set values thereof can be substituted.

Therefore, the control unit 150 of the second embodiment shown in Figs. 6 and 7 is structured, by the comparison calculator 153 installed in the control unit 150, so as to control the exhaust gas recirculation rate controller 160 for fetching and comparing the measured value of the temperature sensor 14d installed at the exit of the water walls 102 and 103 of the furnace 1a with the vapor temperature set value outputted from the vapor temperature setting unit 252a installed in the control unit 150 for calculating and setting the set value of the water wall exit temperature according to an instruction signal of the fuel flow rate outputted from the fuel flow rate controller 154 of the control unit 150, outputting the deviation between the two, thereby adjusting the operation of the recirculation fan 26.

Next, the control of the vapor temperature at the exit of the water walls 102 and 103 of the furnace 1a of the oxyfuel boiler 1 of the second embodiment will be explained below.

In the control unit 150 of the oxyfuel boiler 1 of the second embodiment shown in Figs. 6 and 7, the control of the exit vapor temperature of the water walls 102 and 103 of the furnace 1a is executed as indicated below.

Firstly, the control unit 150, on the basis of the measured value of the exit temperature sensor 14d installed in the water walls 102 and 103 of the furnace 1a, compares the measured value of the exit temperature sensor 14d with the set heat absorption rate of the vapor temperature setting unit 252a by the comparison calculator 153 of the control unit 150, when the measured value of the exit temperature sensor 14d is lower than the vapor temperature set value set by the vapor temperature setting unit 252a, outputs an instruction signal from the exhaust gas recirculation rate controller 160 on the basis of the deviation signal compared by the comparison calculator 153, operates so as to suppress the drive of the recirculation fan 26 installed in the recirculation system 25, reduces the exhaust gas circulation rate flowing through the recirculation system 25, increases the oxygen concentration contained in the oxidizing gas supplied to the oxyfuel boiler 1, and controls the exit vapor temperature measured by the exit temperature sensor 14d of the water walls 102 and 103 of the furnace 1a to a desired value.

Further, when the comparison by the comparison calculator 153 shows that the measured value of the exit temperature sensor 14d is higher than the vapor temperature set value set by the vapor temperature setting unit 252a, the control unit 150 outputs an instruction signal from the exhaust gas recirculation rate controller 160 on the basis of the deviation signal compared by the comparison calculator 153, operates so as to strengthen the drive of the recirculation fan 26 installed in the recirculation system 25, increases the exhaust gas circulation rate flowing through the recirculation system 25, reduces the oxygen concentration contained in the oxidizing gas supplied to the oxyfuel boiler 1, and controls the exit vapor temperature of the water walls 102 and 103 of the furnace 1a to a desired value.

According to this embodiment of the present invention, the oxyfuel boiler, without calculating the heat absorption rate of the furnace or the water walls, using only the measured value of the temperature sensor installed at the exit of the water walls, controls the exhaust gas recirculation rate, so that compared with the first embodiment, by a simple apparatus and method, a highly reliable oxyfuel boiler capable of operating stably over a long period of time and a control method for the oxyfuel boiler can be realized.

(Embodiment 3)

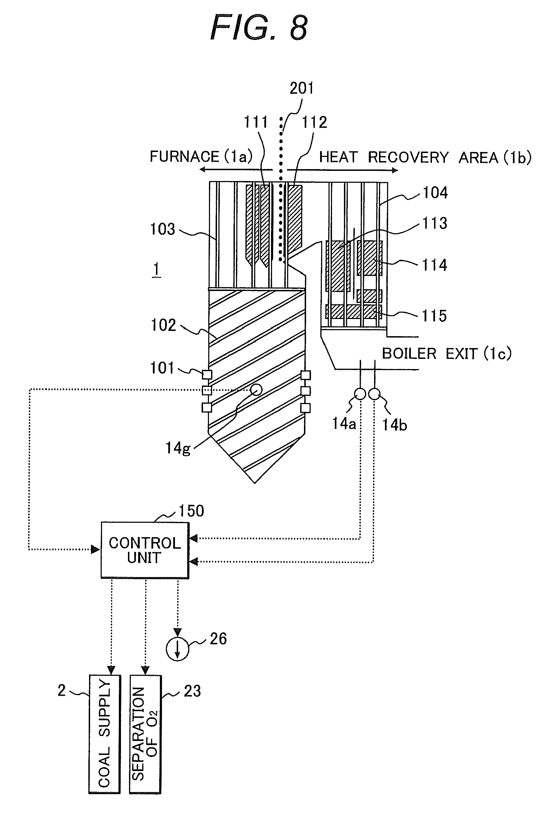

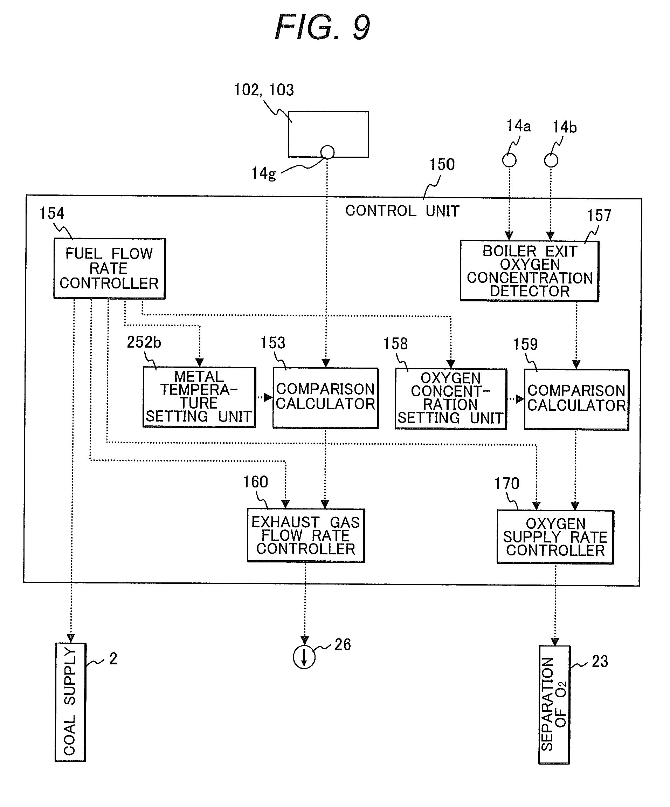

Next, the oxyfuel boiler which is a third embodiment of the present invention and the control method for the oxyfuel boiler will be explained below by referring to Figs. 8 and 9.

Fig. 8 is a schematic cross sectional view showing the constitution of the coal thermal power plant suitable for $CO_2$ capture having the oxyfuel boiler which is a third embodiment of the present invention.

The oxyfuel boiler 1 of the third embodiment of the present invention has a basic constitution substantially similar to that of the oxyfuel boiler 1 of the second embodiment of the present invention shown in Figs. 6 and 7, so that the explanation of the portions of the constitution common to both will be omitted and only the different portions of the constitution will be explained below.

In the oxyfuel boiler 1 of the third embodiment of the present invention shown in Figs. 8 and 9, compared with the oxyfuel boiler of the second embodiment shown in Figs. 6 and 7, with respect that in place of the temperature sensor 14d installed at the exit of the water walls 102 and 103 of the furnace 1a, a metal temperature sensor 14g for measuring the metal temperature is installed on the representative water pipe of the water walls 102 and 103 of the furnace 1a is different.

Next, the control of the metal temperature of the water pipes of the water wall 102 or 103 composing the furnace 1a of the oxyfuel boiler 1 of the third embodiment will be explained below.

The control unit 150 of the third embodiment shown in Figs. 8 and 9 is structured, by the comparison calculator 153 installed in the control unit 150, so as to control the exhaust gas recirculation rate controller 160 for fetching and comparing the measured value of the metal temperature sensor 14g installed in the representative water pipe of the water wall 102 or 103 of the furnace 1a with the metal temperature set value outputted from a metal temperature setting unit 252b installed in the control unit 150 for calculating and setting the metal temperature of the water wall 102 or 103 of the furnace 1a according to an instruction signal of the fuel flow rate outputted from the fuel flow rate controller 154 of the control unit 150, outputting the deviation between the two, thereby adjusting the operation of the recirculation fan 26.

And, the control unit 150, when the measured value of the metal temperature sensor 14g is lower than the metal temperature set value set by the metal temperature setting unit 252b, outputs an instruction signal from the exhaust gas recirculation rate controller 160 on the basis of the deviation signal compared by the comparison calculator 153, operates so as to suppress the drive of the recirculation fan 26 installed in the recirculation system 25, reduces the exhaust gas circulation rate flowing through the recirculation system 25, increases the oxygen concentration contained in the oxidizing gas supplied to the oxyfuel boiler 1, and controls the metal temperature of the metal temperature sensor 14g measured by the representative water pipe of the water wall 102 or 103 of the furnace 1a to a desired value.

Further, the control unit 150, when the measured value of the metal temperature sensor 14g is higher than the metal temperature set value set by the metal temperature setting unit 252b, outputs an instruction signal from the exhaust gas recirculation rate controller 160 on the basis of the deviation signal compared by the comparison calculator 153, operates so as to strengthen the drive of the recirculation fan 26 installed in the recirculation system 25, increases the exhaust gas circulation rate flowing through the recirculation system 25, reduces the oxygen concentration contained in the oxidizing gas supplied to the oxyfuel boiler 1, and controls the metal temperature of the metal temperature sensor 14g measured by the representative water pipe of the water wall 102 or 103 of the furnace 1a to a desired value.

The metal temperature sensor 14g installed in the representative water pipe of the water wall 102 or 103 of the furnace 1a used for the control of the exhaust gas circulation flow rate of this embodiment, for example, may be installed in a place in the water pipes composing the water wall 102 or 103 of the furnace 1a where the metal temperature is highest.

As mentioned above, the metal temperature sensor 14g is installed and is controlled by the control unit 150, so that the highest metal temperature when the water wall 102 or 103 of the furnace 1a rises in temperature can be controlled so as not to exceed the limit value based on the heat resistance of the material of the water wall and the water wall 102 or 103 of the furnace 1a can be prevented from damage due to overheating of the material.

Further, when controlling the vapor temperature heated by the water wall 102 or 103 of the furnace 1a to a desired value, the heat generated by combustion gas burned in the furnace 1a is transferred to the metal of the water pipes of the water wall 102 or 103 of the furnace 1a, and moreover the vapor temperature is changed after the heat is transferred to the vapor in the water pipes, so that the time lag from the change of the combustion condition in the furnace 1a to the exertion of the influence on the vapor temperature increases.

Therefore, like the oxyfuel boiler 1 of this embodiment, if the metal temperature sensor 14g is installed in the representative water pipe of the water wall 102 or 103 of the furnace 1a and the exhaust gas circulation flow rate is directly controlled using the measured value of the metal temperature when the metal temperature of the water pipes is measured, the aforementioned time lag is shortened and the follow-up of the control for the change in the combustion condition in the furnace 1a can be improved.

According to the aforementioned oxyfuel boiler of this embodiment of the present invention, when a coal boiler operated as an existing air-fuel boiler is operated as an oxyfuel boiler, the expense required for modification can be suppressed, and the damage to the oxyfuel boiler due to high-temperature gas is prevented, thus a highly reliable oxyfuel boiler capable of operating stably over a long period of time and a control method for the oxyfuel boiler can be realized.

The present invention can be applied to an oxyfuel boiler suitable for capture of $CO_2$ of a coal thermal power plant and a control method for the oxyfuel boiler.

**Claims**

1.  An oxyfuel boiler system comprising:

    a boiler (1);
    a heat exchanger;
    an air separation unit (23) for separating oxygen from air;
    an oxygen supply system (24) for supplying the oxygen to the boiler (1);
    a recirculation system (25) for supplying a part of exhaust gas discharged from the boiler (1) to the oxygen supply system (24);
a first measuring sensor (14) for measuring a first actual operating parameter of the system; and
a control unit (150), the control unit (150) further comprising:

a desired value setting unit (152) for setting a desired operating parameter of the system; and
an exhaust gas flow rate controller (160) for outputting an instruction signal for adjusting an operation of the recirculation system (25) based on the desired operating parameter of the system and the first actual operating parameter.

2. The oxyfuel boiler system according to Claim 1,
wherein the control unit (150) further comprises:

a calculating unit (170) for determining a second actual operating parameter of the system, wherein the calculating unit (170) has the first actual operating parameter as an input.

3. The oxyfuel boiler system according to Claim 1, further comprising a downstream measuring sensor (14a, 14b), and wherein the first measuring sensor (14d-14f) is an upstream measuring sensor.

4. The oxyfuel boiler system according to Claim 1, further comprising:

a fuel flow rate controller (154) for calculating an instruction signal for fuel supplied to the boiler, wherein the desired value setting unit (160) has the instruction signal for fuel as an input.

5. The oxyfuel boiler system according to Claim 1, wherein:

the first measuring sensor (14c, 14d) is a temperature sensor;
the first actual operating parameter is an operating temperature; and
the desired operating parameter is a desired operating temperature.

6. The oxyfuel boiler system according to Claim 2, further comprising:

a second measuring sensor (14f) for measuring flow rate; and
a third measuring sensor (14e) for measuring pressure,
wherein:

the first measuring sensor (14c, 14d) is a temperature sensor;
the control unit (150) further comprises a fuel flow rate controller (154) for calculating an instruction signal for fuel supplied to the boiler (1);
the desired operating parameter is a furnace heat absorption rate; and
the second actual operating parameter is a furnace heat absorption rate.

7. The oxyfuel boiler system according to Claim 6,
wherein the first, second, and third measuring sensors (14c-14f) are located inside the boiler.

8. The oxyfuel boiler system according to Claim 6,
wherein the first measuring sensor (14c, 14d) is located at an entrance of the heat exchanger or an exit of the heat exchanger.

9. The oxyfuel boiler system according to Claim 6,
wherein the first measuring sensor (14c, 14d) measures a temperature of vapor flowing in the heat exchanger.

10. The oxyfuel boiler system according to Claim 6,
wherein the heat exchanger comprises a water wall (102, 103) which further comprise water pipes (104).

11. The oxyfuel boiler system according to Claim 1, wherein:

the heat exchanger comprises a water wall (102, 103) which further comprises water pipes (104), and
the first measuring sensor (14c, 14d) measures a temperature of on one of the water pipes (104) or measures a vapor temperature at an exit of the water wall (102, 103).

12. The oxyfuel boiler system according to Claim 4, the control unit further comprising:

an oxygen concentration detector (157) for detecting an actual operating oxygen concentration;
a desired operating oxygen concentration setting unit (158) for setting a desired operating oxygen concentration; and
an oxygen supply rate controller (170) for generating an instruction signal for adjusting an operation of the oxygen supply system.

13. The oxyfuel boiler system according to Claim 9, further comprising a fourth sensor (14d) for measuring a temperature, wherein:

the first measuring sensor (14c) is located at an entrance of the heat exchanger;
the fourth measuring sensor (14d) is located at an exit of the heat exchanger; and
the furnace heat absorption rate is calculated by the following formula:

$$Q = \sum_i F_i \times (H_{out,i} - H_{in,i}) \quad \cdots\cdots (2)$$

wherein;
Q is the furnace heat absorption rate;
$F_i$ is the flow rate measured by second measuring sensor;
$H_{out,i}$ is an exit vapor enthalpy of the heat exchanger calculated from the parameters measured by the third sensor and the fourth sensor;
$H_{in,i}$ is an entrance vapor enthalpy of the heat exchanger calculated from the parameters measured by the first sensor and the third sensor;

14. The oxyfuel boiler system according to Claim 4,
wherein the exhaust gas flow rate controller further comprises:

a function generation unit (161) for calculating an instruction signal of an exhaust gas recirculation rate from the instruction signal for fuel;
a PI controller (162) for calculating a correction signal for the exhaust gas recirculation rate by using the following formula:

$$\Delta y(t) = K_p \cdot x_2(t) + K_i \cdot \int x_2(\tau)\, d\tau \quad \cdots\cdots (4)$$

wherein:

$K_p$ is a proportional gain of the PI controller;
$K_i$ is an integral gain of the PI controller; and
$X_2$ is a deviation signal between the desired operating parameter and a parameter based on the first actual operating parameter; and

an adder (163) for adding the exhaust gas recirculation rate and the correction signal.

15. The oxyfuel boiler system according to Claim 1,
wherein the recirculation system (25) has a recirculation fan (26) for supplying the part of exhaust gas to the oxygen supply system (24).

16. A controller for controlling an oxyfuel boiler system having a boiler (1), an oxygen supply system (24), and a recirculation system (25) for delivering a part of exhaust gas discharged from the boiler (1) to the oxygen supply system (24) comprising:

a fuel flow rate controller (154) for calculating an instruction signal for fuel supplied to the boiler (1);
a desired value setting unit (152) for setting a desired operating parameter of the system based on the instruction signal for fuel; and
an exhaust gas flow rate controller (160) for generating an instruction signal for adjusting an operation of the recirculation system (25) based on the desired operating parameter of the system and the a first actual operating parameter.

17. The controller according to Claim 16, further comprising:

a calculating unit (170) for generating a second actual operating parameter of the system, wherein the second actual operating parameter is determined by the calculating unit (170) having the first actual parameter as an input; and
the exhaust gas flow rate controller (160) for generating an instruction signal for adjusting an operation of the recirculation system based on the desired operating parameter of the system and the second actual operating parameter.

18. A control method for an oxyfuel boiler system having a boiler, an oxygen supply system, and a recirculation system for delivering a part of exhaust gas discharged from the boiler to the oxygen supply system, comprising:

setting a desired operating parameter of the system based on a fuel flow rate supplied to the boiler;
calculating a desired flow rate for the part of exhaust gas based on the desired operating parameter and a first actual operating parameter; and
adjusting an operation of the recirculation system based on the desired flow rate for the part of exhaust gas.

19. The method according to Claim 17, further comprising:

calculating a second actual operating parameter;
calculating a desired flow rate for the part of exhaust gas based on the desired operating parameter and the second actual operating parameter; and
adjusting an operation of the recirculation system based on the desired flow rate for the part of exhaust gas.

EP 2 292 974 A2

*FIG. 1*

18

## FIG. 2

# FIG. 3

102, 103, 111

14c-14f

14a  14b

150

CONTROL UNIT

154

FUEL FLOW RATE CONTROLLER

151

FURNACE HEAT ABSORPTION RATE CALCULATOR

157

BOILER EXIT OXYGEN CONCENTRATION DETECTOR

152

HEAT ABSORPTION RATE SETTING UNIT

153

COMPARISON CALCULATOR

158

OXYGEN CONCENT-RATION SETTING UNIT

159

COMPARISON CALCULATOR

160

EXHAUST GAS FLOW RATE CONTROLLER

170

OXYGEN SUPPLY RATE CONTROLLER

COAL SUPPLY  2

26

SEPARATION OF O₂  23

# FIG. 4

154

FUEL FLOW
RATE
CONTROLLER

153

COMPARISON
CALCULATOR

160

EXHAUST GAS
FLOW RATE
CONTROLLER

164

161

FUNCTION
GENERATION
UNIT

165

162

PI
CONTROLLER

166

163

ADDER

167

168

26

# FIG. 5

154

FUEL FLOW
RATE
CONTROLLER

159

COMPARISON
CALCULATOR

170

OXYGEN
SUPPLY RATE
CONTROLLER

174

175

171

FUNCTION
GENERATION
UNIT

172

PI
CONTROLLER

176

177

173

ADDER

178

23

SEPARATION
OF $O_2$

# FIG. 6

# FIG. 7

102, 103

14a  14b

14d

150

154

CONTROL UNIT

157

FUEL FLOW
RATE
CONTROLLER

BOILER EXIT
OXYGEN
CONCENTRATION
DETECTOR

252a

153

158

159

TEMPERA-
TURE
SETTING
UNIT

COMPARISON
CALCULATOR

OXYGEN
CONCENT-
RATION
SETTING UNIT

COMPARISON
CALCULATOR

160

170

EXHAUST GAS
FLOW RATE
CONTROLLER

OXYGEN
SUPPLY RATE
CONTROLLER

COAL SUPPLY ~ 2

26

SEPARATION OF O$_2$ ~ 23

EP 2 292 974 A2

# FIG. 8

25

# FIG. 9

102, 103

14g

14a  14b

150

CONTROL UNIT

154

FUEL FLOW
RATE
CONTROLLER

157

BOILER EXIT
OXYGEN
CONCENTRATION
DETECTOR

252b

METAL
TEMPERA-
TURE
SETTING UNIT

153

COMPARISON
CALCULATOR

158

OXYGEN
CONCENT-
RATION
SETTING UNIT

159

COMPARISON
CALCULATOR

160

EXHAUST GAS
FLOW RATE
CONTROLLER

170

OXYGEN
SUPPLY RATE
CONTROLLER

COAL SUPPLY ~ 2

26

SEPARATION OF O₂ ~ 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007147162 A